# EUROPEAN PATENT APPLICATION

(11) **EP 4 725 821 A1**
(43) Date of publication of application: **15.04.2026**
(21) Application number: 24821240.9
(22) Date of filing: 11.06.2024
(51) Int. Cl.: B62M 6/40

(54) **POWER MODULE OF ELECTRIC ASSISTED BICYCLE**

(30) Priority: 17.07.2023 US 202363527246 P
(71) Applicant: Delta Electronics, Inc., Taoyuan City 333 (TW)
(72) Inventor: CHUNG, Chi-Wen, Taoyuan City 333 (TW); TSAO, Ming-Li, Taoyuan City 333 (TW); HUANG, Chien-Ping, Taoyuan City 333 (TW); CHEN, Chun-Lin, Taoyuan City 333 (TW)
(74) Representative: Uexküll & Stolberg
(86) International application number: PCT/CN2024/098463
(87) International publication number: WO 2025/016098

(57) **Abstract**

A power module of an electric assisted bicycle is disclosed and includes a pedal shaft, a housing, a motor, a reducer, a gear-plate-output shaft, a pedal-shaft first two-way bearing and an encoder component. The housing includes a partition portion extended along a radial direction to divide the housing into a motor accommodation portion and a reducer accommodation portion, respectively. The pedal shaft is disposed in the housing and passes through an end cap of the housing along an axial direction. An extension portion of the reducer is extended toward the end cap and connected to a supporting portion of the end cap through an input-shaft rear bearing. The supporting portion, the input-shaft rear bearing and the extension portion are sleeved from inside of an inner space of the housing to outside along the radial direction sequentially, so that facilitates axial directional configuration of the encoder component and increases usage space.

## Description

### FIELD OF THE INVENTION

The present disclosure relates to a power module, and more particularly to a power module of a mid-drive electric assisted bicycle.

### BACKGROUND OF THE INVENTION

An electric assisted bicycle, also known as an e-bike, is a bicycle with an integrated electric motor and reducer used to assist propulsion through the motor power. Many kinds of e-bikes are available in the market, while they generally fall into two categories: one is an electric assisted bicycle that detects and assists the rider's pedal-power, and the other is a conventional electric bicycle that provides the motor power merely. Since related structures and circuits for manpower and motor-assisted power have to be integrated in the electric assisted bicycle at the same time, size reduction has always been an important issue in designs of a power module. In addition, the power module accepts dual power inputs (i.e., the manpower and the motor-assisted power) at the same time, in order to assist the rider's performance under different usage scenarios. Therefore, the design of the power module for the electric assisted bicycle is quite difficult.

The power module of the conventional electric assisted bicycle mainly includes a motor and a reducer, which are arranged in a housing of the power module. In the prior art, the motor and the reducer are radial-directionally arranged and sleeved around a central pedal shaft, and a fixed gear of the reducer is connected to the housing. However, the fixed gear is not easy to install onto a fixed portion of the housing, and a radial thickness of the power module is increased due to the fixed gear.

In addition, due to spatial limitations, a torque sensor of the conventional power module is disposed between an inner surface of the housing of the power module and a pedal-shaft two-way bearing, and a pedal force is transmitted through the pedal-shaft bearing. Since the torque sensor is not serially connected within a transmission path of the pedal force, an inferred pedaling torque is calculated based on a downward force from the pedal rather than an actual pedaling torque. Therefore, a sensing error is relatively large, and the pedal force of only one of two pedals can be sensed due to a position configuration of the torque sensor.

Therefore, there is a need of providing a power module with a motor and a reducer arranged axial-directionally for a mid-drive electric assisted bicycle to reduce the radial thickness and volume of the power module, improve an accuracy of pedaling torque measurement, and obviate the drawbacks encountered by the prior arts.

### SUMMARY OF THE INVENTION

An object of the present disclosure is to provide a power module with the motor and the reducer arranged axially for a mid-drive electric assisted bicycle to reduce the radial thickness and volume of the power module, and improve an accuracy of pedaling torque measurement. On the other hand, the encoder component is arranged and configured axially to save the radial space.

Another object of the present disclosure is to provide a power module of a mid-drive electric assisted bicycle. A middle frame of a housing of the power module includes a partition portion extended along a radial direction toward an inner space of the housing, and the partition portion is configured to divide the inner space of the housing into a motor accommodation portion and a reducer accommodation portion arranged along an axial direction. When the motor and the reducer are sleeved around the pedal shaft along the axial direction, a stator of the motor and a fixed gear of the reducer are fixed and connected to two opposite sides of the partition portion, so as to realize alignment and installation, improve an assembly efficiency, enhance heat dissipation efficiency of the stator and enhance a structural robustness. Furthermore, the power of the motor is transmitted to the reducer through a reducer input shaft between the motor and the reducer axially arranged. One end of the reducer input shaft constitutes the input-shaft rotor part connected to the rotor (the outlet shaft) of the motor or the motor output shaft, and the other end constitutes the input-shaft eccentric part connected to the movable gear of the reducer. The input-shaft main part between the input-shaft rotor part and the input-shaft eccentric part is further radially connected to the third side of the partition portion through the bearings, so that the reducer input shaft is attached to the partition portion. Furthermore, the reducer input shaft further includes an extension portion extended axially and attached to the end cap of the housing. Thereby, when the motor drives the reducer to operate, the rotation axis of the reducer input shaft can run stably. **In** other words, the stator of the motor abuts against one side of the partition portion along the axial direction to obtain more contact area between the stator and the housing and improve the heat dissipation efficiency. The fixed gear of the reducer is axially attached to the other opposite side of the partition portion to facilitate the positioning and installation, enhance the structure, and further reduce the radial space of the power module. In addition, a supporting portion of the end cap, an input-shaft rear bearing and the extension portion of the reducer input shaft are sleeved and arranged from the inside to the outside along the radial direction sequentially. The outer diameter of the supporting portion is smaller than the inner diameter of the extension portion, and it helps to increase the usage space between the left end cap and the motor, so that facilitates the setting of the driver and the axial configuration of the encoder component. Moreover, the radial space is optimized, and the power module of the electric assisted bicycle can further meet the requirements of miniaturization.

A further object of the present disclosure is to provide a power module of an electric assisted bicycle. By disposing the motor and the reducer arranged along the axial direction on two opposite sides of the partition portion, compared with the radial stacking design, the volume along the axial direction is slightly increased. The slightly additional size increased can be compensated by changing the design of a bicycle frame, so that the overall volume of the power module in the present disclosure is further reduced and is suitable for mounting on the bicycle frame. By connecting the three sides of the partition portion of the housing to the fixed gear of the reducer, the motor stator and the reducer-input-shaft main part, the space utilization of the entire power module can be optimized. Therefore, there is enough space for the torque sensor to be connected to the pedal shaft, so as to realize the accurate measurement of the pedaling torque of left and right sensing. Moreover, the structure is enhanced, the rotation axis of the reducer input shaft is stable, and the heat dissipation effect of the stator is improved at the same time. On the other hand, in the combination of the input-shaft rear bearing (the motor rotation bearing) connected to the supporting portion of the left end cap and the extension portion of the reducer input shaft (the motor rotation shaft), it allows to use a wave spring to eliminate the gap. It helps to increase the space used by the driver board, and also helps the encoder component save the radial space through axial configuration.

In accordance with an aspect of the present disclosure, a power module of an electric assisted bicycle is provided. The power module of the electric assisted bicycle includes a housing, a pedal shaft, a motor, a reducer, a pedal-shaft first two-way bearing, and an encoder component. A radial direction and an axial direction are defined to the housing, and the housing includes an end cap, a middle frame and a partition portion. The end cap and the middle frame are connected to each other to define an inner space. The partition portion is extended along the radial direction toward the inner space, and divides the inner space of the housing into a motor accommodation portion and a reducer accommodation portion arranged along the axial direction. The motor accommodation portion is arranged between the end cap and the partition portion. The pedal shaft is accommodated in the housing, extended along the axial direction, and passes through the end cap. The motor is accommodated in the motor accommodation portion, and fixed to the partition portion along the axial direction. The reducer is accommodated in the reducer accommodation portion, fixed to the partition portion along the axial direction, and includes a reducer input shaft. The reducer input shaft includes an input-shaft main part, an input-shaft rotor part and an extension portion, the input-shaft rotor part is arranged between the input-shaft main part and the extension portion and connected to a motor output shaft of the motor along the radial direction, the input-shaft main part is connected to the partition portion along the radial direction, and the extension portion is extended toward the end cap along the axial direction and connected to a supporting portion of the end cap through an input-shaft rear bearing. The supporting portion, the input-shaft rear bearing and the extension portion are sleeved from inside of the inner space to outside along the radial direction sequentially toward the middle frame. The pedal-shaft first two-way bearing is sleeved between the pedal shaft and the supporting portion. The encoder component is disposed between the extension portion and the end cap along the axial direction.

### BRIEF DESCRIPTION OF THE DRAWINGS

FIG. 1 is a cross-sectional view illustrating a power module of an electric assisted bicycle according to a first embodiment of the present disclosure.
FIG. 2 shows the transmission path of the torque of the power module according to the first embodiment of the present disclosure when the right pedaling torque is inputted.
FIG. 3 shows the transmission path of the torque of the power module according to the first embodiment of the present disclosure when the left pedaling torque is inputted.
FIG. 4 is a cross-sectional view illustrating a power module of an electric assisted bicycle according to a second embodiment of the present disclosure.
FIG. 5 is a cross-sectional view illustrating a power module of an electric assisted bicycle according to a third embodiment of the present disclosure.

Description of reference numerals:
1, 1a, 1b: power module
10: pedal shaft
20: housing
201: motor accommodation portion
202: reducer accommodation portion
21: left end cap
210: supporting portion
22: middle frame
23: right end cap
24: partition portion
30: motor
300: motor output shaft
31: stator
32: magnets
33: input-shaft rear bearing
40: reducer
41: reducer input shaft
411: input-shaft main part
412: input-shaft rotor part
413: input-shaft eccentric part
414: extension portion
42: movable gear
43: fixed gear
44: reducer output shaft
50: gear-plate output shaft
51: chain sprocket
60: sensing component
70: encoder component
71: rotating part
72: sensing part
73: driver
81: pedal-shaft two-way bearing
82: input-shaft-main-part first two-way bearing
83: input-shaft-main-part second two-way bearing
84: input-shaft-eccentric-part first two-way bearing
85: gear-plate-output-shaft first two-way bearing
86: gear-plate-output-shaft second two-way bearing
87: gear-plate-output-shaft first one-way bearing
88: gear-plate-output-shaft second one-way bearing
89: reducer-output-shaft first two-way bearing
90: wave spring
A: reducer-forced point
B: bearing-forced point
C: axial direction
L: force span
M: force fulcrum
S1: first side
S2: second side
S3: third side

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. For example, the present disclosure may repeat reference numerals and/or letters in the various examples. This repetition is for the purpose of simplicity and clarity and does not in itself dictate a relationship between the various embodiments and/or configurations discussed. Further, spatially relative terms, such as "right," "left," "inner," "outside" and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. In addition, although the "first," "second," "third," and the like terms in the claims be used to describe the various elements can be appreciated, these elements should not be limited by these terms, and these elements are described in the respective embodiments are used to express the different reference numerals, these terms are only used to distinguish one element from another element. For example, a first element could be termed a second element, and, similarly, a second element could be termed a first element, without departing from the scope of example embodiments. Besides, "and / or" and the like may be used herein for including any or all combinations of one or more of the associated listed items.

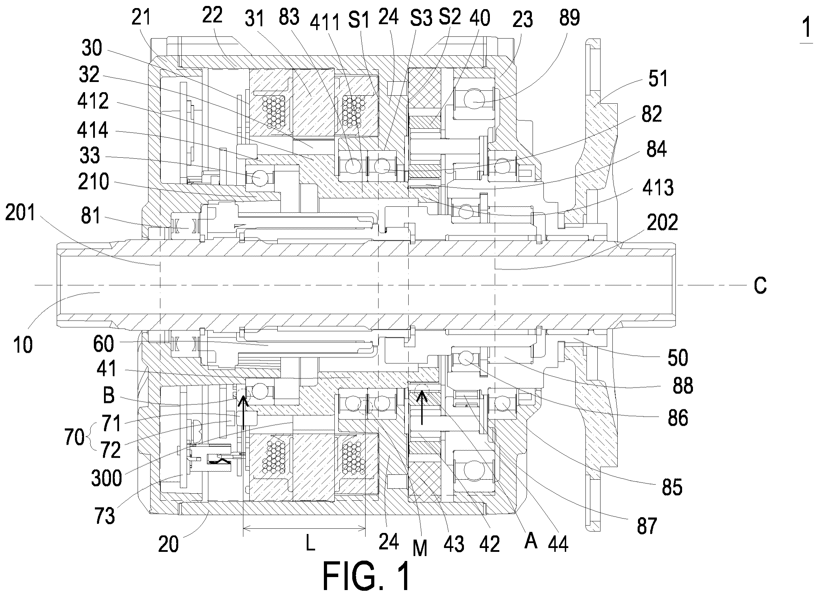

FIG. 1 to FIG. 3 illustrate a power module of an electric assisted bicycle according to a first embodiment of the present disclosure. In the first embodiment, a power module of an electric assisted bicycle (hereinafter referred to as the power module for short) 1 is applied in for example but not limited to a mid-drive architecture, and includes a pedal shaft 10, a housing 20, a motor 30, a reducer 40, a gear-plate output shaft 50, a pedal-shaft two-way bearing 81, a sensing component 60 and an encoder component 70. The aforementioned mid-drive architecture means that the power module 1 is installed between a front wheel and a rear wheel of the electric assisted bicycle. For example, the power module 1 is disposed on a bottom bracket, which is usually distinguished from a hub-type design installed on the wheel directly. For explanation, a radial direction and an axial direction C are defined to the housing 20, and the radial direction is perpendicular to the axial direction C. The housing 20 includes a left end cap 21, a middle frame 22, a right end cap 23 and a partition portion 24. The left end cap 21, the middle frame 22 and the right end cap 23 are connected to each other to define an inner space of the housing 20. In the first embodiment, the partition portion 24 is extended from the middle frame 22 along the radial direction toward the inner space of the housing 20. In this way, the partition portion 24 extended along the radial direction toward the inner space of the housing 20 divides the inner space of the housing 20 into a motor accommodation portion 201 (the left space shown in the figure) and a reducer accommodation portion 202 (the right space) arranged along the axial direction. The pedal shaft 10 penetrates the housing 20 and extended along the axial direction C, so as to pass through the left end cap 21, the middle frame 22 and the right end cap 23 along the axial direction C. Preferably but not exclusively, the motor 30 has an outer-stator-and-inner-rotor structure, and is accommodated in the motor accommodation portion 201. In the first embodiment, the motor 30 includes a stator 31 fixed to a first side S1 (the left side shown in the figure) of the partition portion 24 along the axial direction C. In addition, the reducer 40 is accommodated in the reducer accommodation portion 202, and includes a reducer input shaft 41, a movable gear 42, a fixed gear 43 and a reducer output shaft 44. The reducer input shaft 41 includes an input-shaft main part 411, an input-shaft rotor part 412, an input-shaft eccentric part 413 and an extension portion 414. The extension portion 414 and the input-shaft eccentric part 413 are disposed at two opposite ends of the reducer input shaft 41. The input-shaft rotor part 412 is arranged between the input-shaft main part 411 and the extension portion 414 and connected to the motor output shaft 300 of the motor 30 along the radial direction. In some embodiments, the input-shaft rotor part 412 and the motor output shaft 300 are integrally formed as a common component. That is, both of them are included in the same component to further reduce the device volume, strengthen the structure, and reduce the costs. For example, the magnets 32 of the rotor are arranged around the outer ring wall of the input-shaft rotor part 412 to form the motor output shaft 300. Certainly, the present disclosure is not limited thereto. In the embodiment, the input-shaft main part 411 is arranged between the input-shaft rotor part 412 and the input-shaft eccentric part 413. The input-shaft main part 411 is connected to the partition portion 24 along the radial direction. In the embodiment, an outer diameter of the input-shaft rotor part 412 is greater than an outer diameter of the input-shaft main part 411, and the outer diameter of the input-shaft main part 411 is greater than an outer diameter of the input-shaft eccentric part 413. Certainly, the present disclosure is not limited thereto. Furthermore, in the embodiment, the extension portion 414 is extended toward the left end cap 21 along the axial direction C and connected to a supporting portion 210 of the left end cap 21 through an input-shaft rear bearing 33. The supporting portion 210, the input-shaft rear bearing 33 and the extension portion 414 are sleeved from inside of the inner space to outside along the radial direction sequentially toward the middle frame 22. The structure and the configuration of the supporting portion 210 can effectively reduce the radial space of the device.

In the first embodiment, the movable gear 42 is sleeved around the input-shaft eccentric part 413 along the radial direction. The fixed gear 43 is sleeved around the movable gear 42 along the radial direction, the fixed gear 43 is fixed to a second side S2 (the right side) of the partition portion 24. The reducer output shaft 44 is connected to the movable gear 42, and disposed adjacent to the movable gear 42 along the axial direction C. The input-shaft main part 411 is connected to a third side S3 (the inner side) of the partition portion 24 along the radial direction. The first side S1 and the second side S2 are two opposite sides of the partition portion 24. The third side S3 is formed and connected between the first side S1 and the second side S2. The gear-plate output shaft 50 is accommodated in the housing 20. The reducer output shaft 44 is sleeved around the gear-plate output shaft 50 through a gear-plate-output-shaft first one-way bearing 87 along the radial direction, and the gear-plate output shaft 50 is sleeved around a first end (the right end) of the pedal shaft 10 through a gear-plate-output-shaft second one-way bearing 88 along the radial direction. The pedal-shaft first two-way bearing 81 is accommodated in the housing 20 and sleeved around a second end (the left end) of the pedal shaft 10. Preferably but not exclusively, the sensing component 60 is a torque sensor attached to a partial surface of the pedal shaft 10 and disposed adjacent to one side (the right side) of the pedal-shaft first two-way bearing 81 along the axial direction C.

In the first embodiment, the motor 30 and the reducer 40 of the present disclosure are disposed and arranged along the axial direction C, and accommodated in the housing 20. Moreover, the stator of the motor 30 and the fixed gear 43 of the reducer 40 are fixed to the first side S1 and the opposite second side S2 of the partition portion 24 along the axial direction C, respectively. In the first embodiment, the housing 20 of the power module 1 includes the partition portion 24 extended along the radial direction, so that the inner space of the housing 20 is divided into two accommodation spaces arranged along the axial direction C. One is the motor accommodation portion 201 located between the left side of the partition portion 24 and the left end cap 21, and the other one is the reducer accommodation portion 202 located between the right side of the partition portion 24 and the right end cap 23. The stator 31 of the motor 30 is disposed adjacent to the first side S1 (the left side) of the partition portion 24, the fixed gear 43 (or called as the inner ring gear) of the reducer 40 is disposed adjacent to the second side S2 (the right side) of the partition portion 24, and the input-shaft main part 411 between the motor 30 and the reducer 40 is disposed adjacent to the third side S3 (the inner side) of the partition portion 24. The partition portion 24 is a partial extension of the middle frame 22 of the housing 20, on which the reducer and the motor components can rely to be fixed to the housing 20. Furthermore, one end (the left end) of the reducer input shaft 41 acts as the input-shaft rotor part 412 and the extension portion 414, and the other end (the right end) of the reducer input shaft 41 acts as the input-shaft eccentric part 413. In the first embodiment, a terminal surface of the input-shaft rotor part 412 is connected to the rotor output shaft of the motor 30. An input-shaft-main-part first two-way bearing 82 and an input-shaft-main-part second two-way bearing 83 are disposed between the input-shaft main part 411 and the third side S3 of the partition portion 24. In detail, the inner sides of the input-shaft-main-part first two-way bearing 82 and the input-shaft-main-part second two-way bearing 83 are disposed adjacent to the input-shaft main part 411, and other outer sides of the input-shaft-main-part first two-way bearing 82 and the input-shaft-main-part second two-way bearing 83 are disposed adjacent to the third side S3 (the inner side) of the partition portion 24, so as to fix the input-shaft main part 411. As a result, the reducer 40 can rotate stably around an axis during operation. Moreover, the fixed gear 43 of the reducer 40 is disposed adjacent to the second side S2 of the partition portion 24 along the axial direction C, which results a smaller radial space of the power module 1 compared with that of the conventional implementation having a fixed gear radially connected to the housing. The stator 31 of the motor 30 is attached to the inner surface of the middle frame 22 and the first side S1 of the partition portion 24, to be held firmly and increase a contact area with the housing to improve heat dissipation efficiency. By disposing the stator 31 of the motor 30, the fixed gear 43 of the reducer 40 and the reducer-input-shaft main part 411 of the reducer 40 adjacent to the three sides S1, S2, S3 of the partition portion 24 of the housing 20, respectively, the inner space of the housing 20 of the entire power module 1 can be fully used and optimized. Therefore, there is enough space for the sensing component 60 such as the torque sensor to be disposed on the surface of the pedal shaft 10. Moreover, the structural robustness of the power module 1 is enhanced, the rotation axis of the reducer input shaft 41 is stable, and the heat dissipation efficiency of the stator 31 is improved at the same time.

Notably, in the embodiment, the extension portion 414 of the reducer input shaft 41 is further extended to the left end cap 21 along the axial direction C, and connected to the left end cap 21 of the housing 20 through the input-shaft rear bearing 33. In this way, a force span L from a bearing-forced point B (Referring to the thick arrow on the left as shown in FIG. 1) of the input-shaft rear bearing 33 to a force fulcrum M (Referring to the connection between the two bearings 82, 83 shown in FIG. 1) is extended, and the force span L is greater than a distance from the reducer-forced point A (Referring to the thick arrow on the right as shown in FIG. 1) to the force fulcrum M, so as to enhance a strength endurance of the reducer input shaft 41, improve a stability of the reducer input shaft 41 when the reducer 40 is forced, and to reduce vibration and noise of the entire power module 1. Certainly, the present disclosure is not limited thereto.

On the other hand, in the embodiment, benefiting from the radial assembling space given by the supporting portion 210, the encoder component 70 is further arranged between the extension portion 414 and the left end cap 21 along the axial direction C, and configured to measure the rotation speed of the reducer input shaft 41 (i.e., the motor output shaft 300) when it is rotated. In the embodiment, the encoder component 70 includes a rotating part 71 (i.e., the encoder DISC) and a sensing part 72 (i.e., the read head). The rotating part 71 is connected to one end (the left end) of the extension portion 414 along the axial direction C. The sensing part 72 is spatially corresponding to the rotating part 71 and configured to measure the speed and the angle information when the reducer input shaft 41 (i.e., the motor output shaft 300) is rotated. Preferably but not exclusively, the rotating part 71 and the sensing part 72 are assembled on a circuit board, and the circuit board corresponding to the sensing part 72 is disposed in the inner space between the left end cap 21 and the motor 30. By arranging the encoder component 70 along the axial direction C, the overall radial space of the power module 1 is saved. It helps to optimize the radial space of the power module 1, and the power module 1 can further meet the requirements of miniaturization.

In the first embodiment, the power module 1 further includes a driver 73 disposed in the housing 20 along the axial direction C, and arranged between the motor 30 and the left end cap 21. Moreover, the driver 73 is electrically connected to the encoder component 70 and the sensing component 60. Notably, the supporting portion 210, the input-shaft rear bearing 33 and the extension portion 414 are arranged from the inside of the inner space to the outside along the radial direction sequentially, and the outer diameter of the supporting portion 210 is smaller than the inner diameter of the extension portion 414. It helps to increase the inner space between the left end cap 21 and the motor 30, so that the usage space is increased and it facilitates the setting of the driver 73 and the configuration of the encoder component 70 along the axial direction C configuration. Certainly, the present disclosure is not limited thereto, and not redundantly described herein.

In the first embodiment, the power module 1 further includes a chain sprocket 51 coaxially sleeved around the gear-plate output shaft 50, and the chain sprocket 51 is configured to transmit an assisted torque output of the gear-plate output shaft 50, or transmit a torque output provided by a forward rotation from human pedaling. Preferably but not exclusively, the torque output is transmitted to a rear wheel (not shown) through a chain of the electric assisted bicycle, so that the electric assisted bicycle goes forward. Notably, the torque output is provided through the gear-plate output shaft 50 or the chain sprocket 51. Preferably but not exclusively, in an embodiment, the torque output is provided by the human-pedaling power. In another embodiment, the torque output is provided by the motor 30 driving the reducer 40 to rotate the gear-plate output shaft 50. In other embodiments, the torque output is provided by both of the human-pedaling power and the motor assisted power. Certainly, the gear-plate output shaft 50 and the chain sprocket 51 of the present disclosure can be disposed close to a right foot side or left foot side of the rider, so as to drive the chain and the rear wheel to rotate and make the electric power-assisted bicycle move forward.

In the first embodiment, the power module 1 includes an input-shaft-main-part first two-way bearing 82 and an input-shaft-main-part second two-way bearing 83 arranged along the axial direction C. In addition, the input-shaft-main-part first two-way bearing 82 and the input-shaft-main-part second two-way bearing 83 are sleeved around the input-shaft main part 411 and disposed adjacent to the third side S3 of the partition portion 24 along the radial direction, respectively. The input-shaft-main-part second two-way bearing 83 is connected to one end (the right end) of the input-shaft rotor part 412 along the axial direction C. Moreover, in the first embodiment, the power module 1 includes an input-shaft-eccentric-part first two-way bearing 84, which is sleeved around the input-shaft eccentric part 413 and disposed adjacent to the movable gear 42 along the radial direction. The power module 1 further includes a gear-plate-output-shaft first two-way bearing 85 and a gear-plate-output-shaft second two-way bearing 86. The gear-plate-output-shaft first two-way bearing 85 is sleeved around the gear-plate output shaft 50 and disposed adjacent to the right end cap 23 of the housing 20 along the radial direction, and disposed adjacent to the gear-plate-output-shaft first one-way bearing 87 along the axial direction C. The gear-plate-output-shaft second two-way bearing 86 is sleeved around the gear-plate output shaft 50 and the pedal shaft 10 along the radial direction, and disposed adjacent to the gear-plate-output-shaft second one-way bearing 88 along the axial direction C. In the first embodiment, the gear-plate-output-shaft first two-way bearing 85 and the gear-plate-output-shaft second two-way bearing 86 are configured for restricting the gear-plate output shaft 50 from moving along the axial direction C. In the first embodiment, the power module 1 further includes a reducer-output-shaft first two-way bearing 89, which is sleeved and connected between the reducer output shaft 44 and the inner surface of the housing 20 along the radial direction. In the embodiment, the inner surface of the housing 20 is located at the right end cap 23.

In the first embodiment, the stator 31 of the motor 30, the fixed gear 43 of the reducer 40 and the reducer-input-shaft main part 411 of the reducer 40 are disposed adjacent to the three sides S1, S2, S3 of the partition portion 24 of the housing 20, respectively, so that the inner space of the housing 20 of the entire power module 1 can be fully used and optimized. Therefore, there is enough space for the sensing component 60 to be accommodated in the housing 20 and connected to the surface of the pedal shaft 10. In the embodiment, a power source of the reducer 40 is transmitted from the input-shaft rotor part 412 that is connected to the motor rotor or the motor output shaft, the input-shaft eccentric part 413, and then to the movable gear 42. When the movable gear 42 receives a rotational power, the movable gear 42 performs revolution and rotation motions due to gear meshing between the movable gear 42 and the fixed gear 43, and a driven force from the input-shaft eccentric part 413. When the movable gear 42 performs the revolution and rotation motions, a movable-gear index aperture 421 of the movable gear 42 drives a reducer-output-shaft fixed pin through a movable-gear two-way bearing, so that the input shaft 44 obtains a final rotational power and outputs it.

Notably, when the motor and the reducer are radially disposed and arranged according to the prior art, although a width along the axial direction C is reduced, the radial thickness is relatively increased. In contrast, in the present disclosure, the motor 30 and the reducer 40 are arranged along the axial direction C, the volume along the axial direction C is slightly increased compared with the radial stacking design. However, a bicycle frame can be modified appropriately to compensate the slightly increased volume, so that the overall volume of the power module 1 is further reduced and is suitable for mounting on the bicycle frame, while an aesthetic appearance is provided.

On the other hand, in order to meet requirements of volume miniaturization and balance of bilateral (pedaling) sensing, the sensing component 60 such as the torque sensor is arranged in a middle of the pedal shaft 10. Preferably but not exclusively, the sensing component 60 is disposed at the right side of the pedal-shaft first two-way bearing 81 but not in contact with the pedal-shaft first two-way bearing 81, and is connected to the pedal shaft 10. Therefore, based on this design, the reducer 40 is moved (towards the right side indicated in the figure) along the axial direction C to give way to radial space for sensing component 60, so that an axial arrangement of the reductor 40 and the motor 30 is formed. Compared with the conventional radial stacking design of the motor and the reducer, the present disclosure is able to reduce a part of the radial space of the original design after the reducer 40 is moved along the axial direction C, and allow the sensing component 60 (the torque sensor) to be disposed in the middle of the pedal shaft 10. Since the sensing component 60 is connected to the surface of the pedal shaft 10 and is placed in the middle, it is connected in series in the torque flow (transmission) path, so that the requirement for bilateral (pedaling) sensing balance is realized.

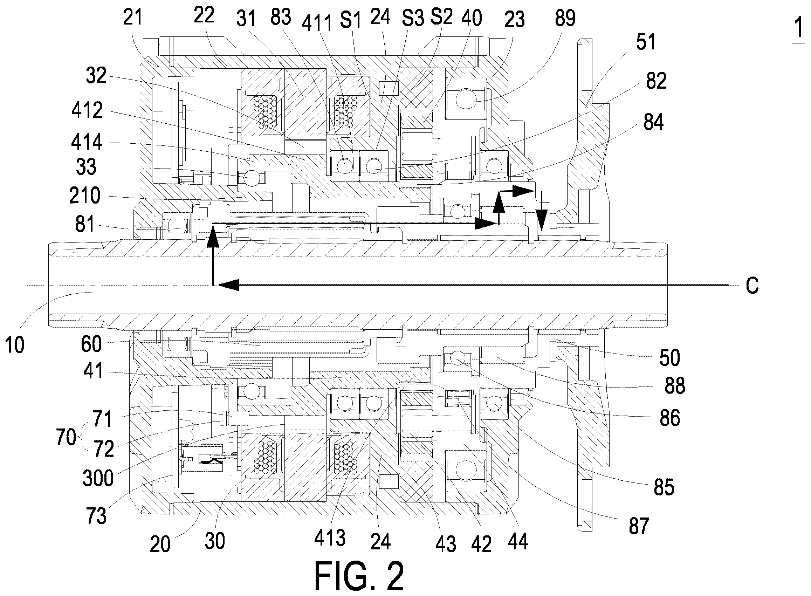

In the first embodiment, when a right pedaling torque is inputted to the pedal shaft 10 by the rider, as shown in FIG. 2, the torque flow is transmitted from the right side of the pedal shaft 10 to the left side, then returns to the right side through the sensing component 60 on the surface of the pedal shaft 10, and then is outputted through the gear-plate output shaft 50 and the chain sprocket 51. Since the sensing component 60 is connected in series in the transmission path of the torque flow, and located between the torque input point and the torque output point, the sensing component 60 directly encounters the transmitted torque, which improves the measurement accuracy.

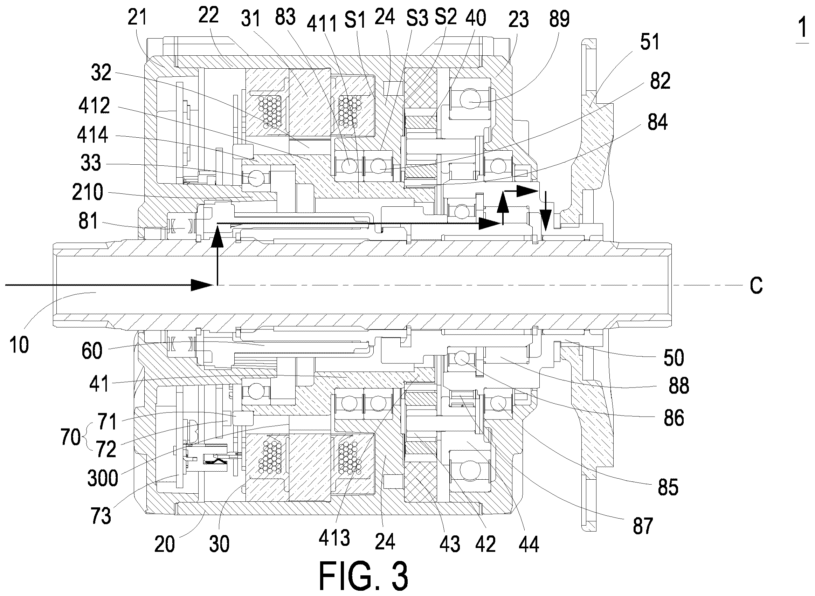

In the first embodiment, when a left pedaling torque is inputted to the pedal shaft 10 by the rider, as shown in FIG. 3, the torque flow is transmitted from the left side of the pedal shaft 10 to the right side, then flows through the sensing component 60 on the surface of the pedal shaft 10, and then is outputted through the gear-plate output shaft 50 and the chain sprocket 51. Since the sensing component 60 is connected in series in the transmission path of the torque flow, and located between the torque input point and the torque output point, the sensing component 60 is directly subjected to the transmitted torque, which improves the measurement accuracy.

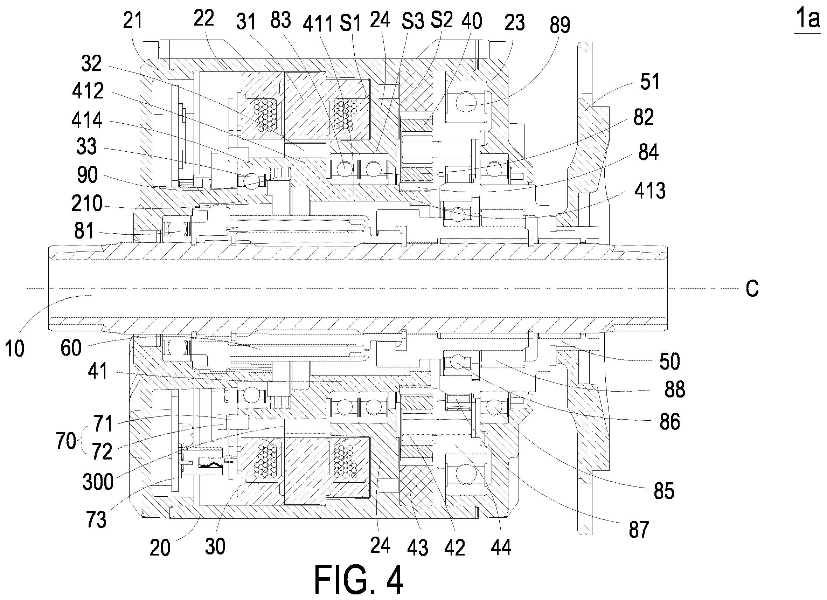

FIG. 4 illustrates a power module of an electric assisted bicycle according to a second embodiment of the present disclosure. In the second embodiment, the power module 1a is similar to the power module 1 of FIGS. 1 to 3, elements with same structures and functions are denoted with same symbols, and are not redundantly described herein. In the second embodiment, the power module 1a further includes a wave spring 90, which is arranged between the input-shaft rear bearing 33 and the extension portion 414 of reducer input shaft 41 along the axial direction C. When the input-shaft rear bearing 33 (i.e., the motor rotation bearing) is assembled between the supporting portion 210 of the left end cap 21 and the extension portion 414 of the reducer input shaft 41 (i.e., the motor rotation shaft), it allows to use the wave spring 90 to eliminate the gap. It helps to increase the usage space for the driver 73, and also helps the encoder component 70 save the radial space through the configuration along the axial direction C. Certainly, the present disclosure is not limited thereto.

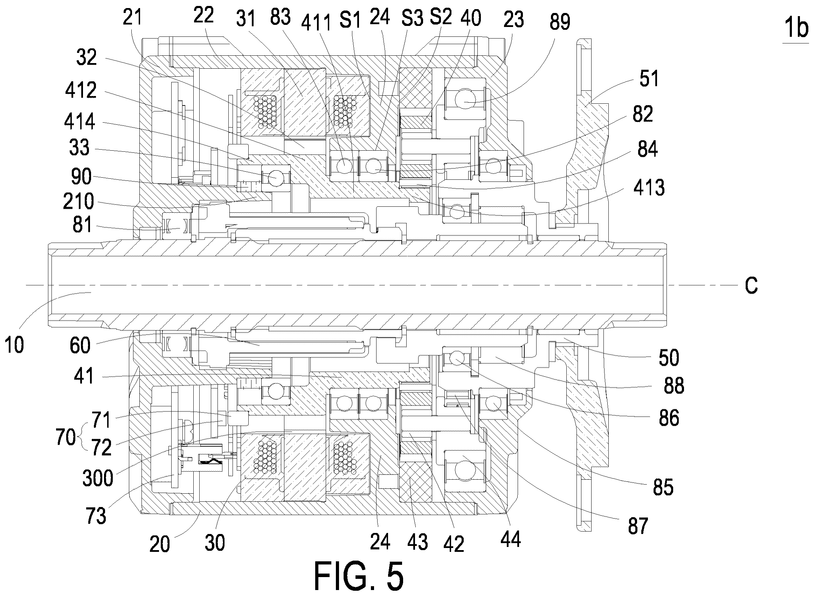

FIG. 5 illustrates a power module of an electric assisted bicycle according to a third embodiment of the present disclosure. In the third embodiment, the power module 1b is similar to the power modules 1, 1a of FIGS. 1 to 4, elements with same structures and functions are denoted with same symbols, and are not redundantly described herein. In the third embodiment, the power module 1b further includes a wave spring 90, which is arranged between the input-shaft rear bearing 33 and the supporting portion 210 of the left end cap 21 along the axial direction C. When the input-shaft rear bearing 33 (i.e., the motor rotation bearing) is assembled between the supporting portion 210 of the left end cap 21 and the extension portion 414 of the reducer input shaft 41(i.e., the motor rotation shaft), it allows to use the wave spring 90 to eliminate the gap. It helps to increase the usage space for the driver 73, and also helps the encoder component 70 save the radial space through the configuration along the axial direction C. Certainly, the present disclosure is not limited thereto and not redundantly described hereafter.

In summary, the present disclosure provides a mid-drive power module with the motor and the reducer arranged axially for an electric assisted bicycle to reduce the radial thickness and volume of the power module, and improve the accuracy of pedaling torque measurement. On the other hand, the encoder component is arranged and configured axially to save the radial space. The middle frame of the housing includes a partition portion extended along the radial direction toward the inner space and divides an inner space of the housing into a motor accommodation portion and a reducer accommodation portion arranged along the axial direction. When the motor and the reducer are sleeved around the pedal shaft along the axial direction, the stator of the motor and the fixed gear of the reducer are fixed and connected to the two opposite sides of the partition portion, so as to realize the alignment and installation, improve the assembly efficiency, enhance the heat dissipation efficiency of the stator and enhance the structure robustness. Furthermore, the power of the motor is transmitted to the reducer through a reducer input shaft between the motor and the reducer that are axially arranged. One end of the reducer input shaft constitutes the input-shaft rotor part connected to the rotor (the outlet shaft) of the motor or the motor output shaft, and the other end constitutes the input-shaft eccentric part connected to the movable gear of the reducer. The input-shaft main part between the input-shaft rotor part and the input-shaft eccentric part is further radially connected to the third side of the partition portion through the bearings, so that the reducer input shaft is attached to the partition portion. Furthermore, the reducer input shaft further includes an extension portion extended axially and attached to the end cap of the housing. Thereby, when the motor drives the reducer to operate, the rotation axis of the reducer input shaft can run stably. In other words, the stator of the motor abuts against one side of the partition portion along the axial direction to obtain more contact area between the stator and the housing and improve the heat dissipation efficiency. The fixed gear of the reducer is axially attached to the other opposite side of the partition portion to facilitate the positioning and installation, enhance the structure, and further reduce the radial space of the power module. In addition, a supporting portion of the end cap, an input-shaft rear bearing and the extension portion of the reducer input shaft are sleeved and arranged from the inside to the outside along the radial direction sequentially. The outer diameter of the supporting portion is smaller than the inner diameter of the extension portion, and it helps to increase the usage space between the left end cap and the motor, so that facilitates the setting of the driver and the axial configuration of the encoder component. Moreover, the radial space is optimized, and the power module of the electric assisted bicycle can further meet the requirements of miniaturization. By disposing the motor and the reducer arranged along the axial direction on two opposite sides of the partition portion, compared with the radial stacking design, the volume along the axial direction is slightly increased. The slightly additional size increased can be compensated by changing the design of the bicycle frame, so that the overall volume of the power module in the present disclosure is further reduced and is suitable for mounting on the bicycle frame. By connecting the three sides of the partition portion of the housing to the fixed gear of the reducer, the motor stator and the reducer-input-shaft main part, the space utilization of the entire power module can be optimized. Therefore, there is enough space for the torque sensor to be connected to the pedal shaft, so as to realize the accurate measurement of the pedaling torque of left and right sensing. Moreover, the structure is enhanced, the rotation axis of the reducer input shaft is stable, and the heat dissipation efficiency of the stator is improved at the same time. On the other hand, in the combination of the input-shaft rear bearing (the motor rotation bearing) connected to the supporting portion of the left end cap and the extension portion of the reducer input shaft (the motor rotation shaft), it allows to use a wave spring to eliminate the gap. It helps to increase the space used by the driver board, and also helps the encoder component save the radial space through axial configuration.

While the disclosure has been described in terms of what is presently considered to be the most practical and preferred embodiments, it is intended to cover various modifications and similar arrangements included within the spirit and scope of the appended claims which are to be accorded with the broadest interpretation so as to encompass all such modifications and similar structures.

## Claims

1. A power module of an electric assisted bicycle, comprising:
a housing with which a radial direction and an axial direction are defined, and comprising an end cap, a middle frame and a partition portion, wherein the end cap and the middle frame are connected to each other to define an inner space, and the partition portion is extended along the radial direction toward the inner space, and divides the inner space of the housing into a motor accommodation portion and a reducer accommodation portion arranged along the axial direction, wherein the motor accommodation portion is arranged between the end cap and the partition portion;
a pedal shaft accommodated in the housing, extended along the axial direction, and passing through the end cap;
a motor accommodated in the motor accommodation portion, and fixed to the partition portion along the axial direction;
a reducer accommodated in the reducer accommodation portion, fixed to the partition portion along the axial direction, and comprising a reducer input shaft, wherein the reducer input shaft comprises an input-shaft main part, an input-shaft rotor part and an extension portion, the input-shaft rotor part is arranged between the input-shaft main part and the extension portion and connected to a motor output shaft of the motor along the radial direction, the input-shaft main part is connected to the partition portion along the radial direction, and the extension portion is extended toward the end cap along the axial direction and connected to a supporting portion of the end cap through an input-shaft rear bearing, wherein the supporting portion, the input-shaft rear bearing and the extension portion are sleeved from inside of the inner space to outside along the radial direction sequentially toward the middle frame;
a pedal-shaft first two-way bearing sleeved between the pedal shaft and the supporting portion; and
an encoder component disposed between the extension portion and the end cap along the axial direction.

2. The power module of the electric assisted bicycle according to claim 1, wherein the encoder component comprises a rotating part and a sensing part arranged along the axial direction, and the rotating part is disposed on the extension portion.

3. The power module of the electric assisted bicycle according to claim 1, wherein an outer diameter of the supporting portion is smaller than an inner diameter of the extension portion.

4. The power module of the electric assisted bicycle according to claim 1, further comprising a wave spring, wherein the wave spring is arranged between the input-shaft rear bearing and the reducer input shaft along the axial direction.

5. The power module of the electric assisted bicycle according to claim 1, further comprising a wave spring, wherein the wave spring is arranged between the input-shaft rear bearing and the supporting portion along the axial direction.

6. The power module of the electric assisted bicycle according to claim 1, wherein the motor further comprises a stator, and the stator is fixed to a first side of the partition portion.

7. The power module of the electric assisted bicycle according to claim 6, wherein the reducer further comprises a movable gear, a fixed gear and a reducer output shaft, wherein the fixed gear is sleeved around the movable gear along the radial direction, the fixed gear is fixed to a second side of the partition portion, and the first side and the second side are opposite to each other, wherein the reducer output shaft is connected to the movable gear along the axial direction.

8. The power module of the electric assisted bicycle according to claim 7, wherein the reducer input shaft further comprises an input-shaft eccentric part, the movable gear is sleeved around the input-shaft eccentric part along the radial direction, the input-shaft main part is connected to a third side of the partition portion, and the third side is connected between the first side and the second side.

9. The power module of the electric assisted bicycle according to claim 8, wherein, the input-shaft main part is arranged between the input-shaft rotor part and the input-shaft eccentric part, an outer diameter of the input-shaft rotor part is greater than an outer diameter of the input-shaft main part, and the outer diameter of the input-shaft main part is greater than an outer diameter of the input-shaft eccentric part.

10. The power module of the electric assisted bicycle according to claim 8, further comprising an input-shaft-main-part first two-way bearing and an input-shaft-main-part second two-way bearing, wherein the input-shaft-main-part first two-way bearing and the input-shaft-main-part second two-way bearing are arranged along the axial direction, and sleeved around the input-shaft main part and disposed adjacent to the third side of the partition portion along the radial direction, respectively, wherein the input-shaft-main-part second two-way bearing is connected to the input-shaft rotor part along the axial direction.

11. The power module of the electric assisted bicycle according to claim 8, further comprising a reducer-output-shaft first two-way bearing and an input-shaft-eccentric-part first two-way bearing, wherein the reducer-output-shaft first two-way bearing is sleeved around the reducer output shaft and disposed adjacent to the housing along the radial direction, and the input-shaft-eccentric-part first two-way bearing is sleeved around the input-shaft eccentric part and disposed adjacent to the movable gear along the radial direction.

12. The power module of the electric assisted bicycle according to claim 7, further comprising a gear-plate output shaft, wherein the gear-plate output shaft is accommodated in the housing, the reducer output shaft is sleeved around the gear-plate output shaft through a gear-plate-output-shaft first one-way bearing along the radial direction, and the gear-plate output shaft is sleeved around the pedal shaft through a gear-plate-output-shaft second one-way bearing along the radial direction.

13. The power module of the electric assisted bicycle according to claim 12, further comprising a gear-plate-output-shaft first two-way bearing and a gear-plate-output-shaft second two-way bearing configured for restricting the gear-plate output shaft from moving along the axial direction, wherein the gear-plate-output-shaft first two-way bearing is sleeved around the gear-plate output shaft and disposed adjacent to the housing along the radial direction, and disposed adjacent to the gear-plate-output-shaft first one-way bearing along the axial direction, wherein the gear-plate-output-shaft second two-way bearing is sleeved around the gear-plate output shaft and disposed adjacent to the pedal shaft along the radial direction, and disposed adjacent to the gear-plate-output-shaft second one-way bearing along the axial direction.

14. The power module of the electric assisted bicycle according to claim 1, further comprising a sensing component, wherein the sensing component is attached to the pedal shaft, and disposed adjacent to one side of the pedal-shaft first two-way bearing along the axial direction.

15. The power module of the electric assisted bicycle according to claim 1, further comprising a driver, wherein the driver is disposed in the housing, and arranged between the motor and the end cap.
